# EUROPEAN PATENT SPECIFICATION

(11) **EP 1 671 771 B1**
(45) Date of publication and mention of the grant of the patent: **30.11.2011**
(21) Application number: 06007036.4
(22) Date of filing: 17.06.2004
(51) Int. Cl.: B28D 1/14, B28D 1/30

(54) **Forward driving system for use in drilling masonry structures**
Vortriebsystem zur Anwendung beim Bohren von Mauerwerk
Système d'avancement utilisable dans le forage de maçonnerie

(30) Priority: 19.06.2003 GB 0314266
(43) Date of publication of application: 21.06.2006
(62) Divisional of application: 04253610.2
(73) Proprietor: Edscer, William George, Fairwarp Uckfield East Sussex TN22 3BX (GB)
(72) Inventor: Edscer, William George, Fairwarp Uckfield East Sussex TN22 3BX (GB)
(74) Representative: Lacey, Dean Andrew

(56) References cited:
- WO-A2-01/79649
- DE-A- 10 152 446
- DE-A- 19 810 806
- DE-C- 409 611
- FR-A- 881 843

## Description

The invention relates to a method of drilling through a masonry structure according to the preamble of claim 1 and an apparatus for drilling through the same according to the preamble of claim 3.

Such a method and such an apparatus are known from international patent application WO/0179649 (in the name of the present applicant) which discloses various apparatus for drilling curved paths through masonry structures. The applicant has realised that one difficulty when drilling curved paths is that of providing the necessary reaction force for the drill to enable it to move forward through the masonry structure.

According to the invention there is provided a method of drilling through a masonry structure according to claim 1.

According to the invention there is further provided an apparatus for drilling through a masonry structure according to claim 3.

Embodiments of the invention will be described for the purpose of illustration only with reference to the accompanying drawings in which:-
Fig. 1 is a diagrammatic sectional view of a first embodiment not according to the invention;
Fig. 2 is a diagrammatic sectional view of a second embodiment not according to the invention, with a detail of part of the reaction member enlarged;
Fig. 3 is a diagrammatic sectional view of a third embodiment not according to the invention;
Fig. 4 is a diagrammatic side view of a reaction member for use with the embodiment of Fig. 3;
Fig. 5 is a diagrammatic sectional view of a drill head for use in accordance with various embodiments not according to the invention;
Fig. 6A and 6B are front and side views of an alternative reaction member;
Fig. 7 is a diagrammatic sectional view of a drill according to the invention;
Fig. 8A is a diagrammatic sectional view of a drill according to a further embodiment not according to the invention; and Fig. 8B is an enlarged detail in sectional view of the piston of Fig. 8A; and
Fig. 9 illustrates in section the ends of various different shapes of reaction member.

The forward driving apparatus and method of invention is particularly applicable for use with the various drilling apparatus described in International patent application no. PCT/GB01/01735 (publication number WO/0179649). This patent application describes drilling apparatus which can be used to drill curved paths through masonry structures. Such apparatus is particularly useful for example when reinforcing curved masonry structures, such as masonry arched bridges. Using the drilling apparatus previously described, elongate bores may be drilled through such arched structures generally in line with the curvature of the arch, and reinforcing bars may be inserted in these bores. This method is described in patent no. GB 2,302,896, also in the name of the present applicant.

The applicant has realised that one difficulty when drilling a curved bore through a structure is that of providing the necessary reaction force to maintain the forward movement of the drill through the structure. Because of the curvature of the drilling path, it can be more difficult to provide such a reaction force down the shaft and therefore the masonry structure must be relied upon to provide the reaction force. However, such masonry structures are often relatively old and may not be sufficiently strong to provide this reaction force effectively. In addition, accurately controlling the direction of drilling can be difficult.

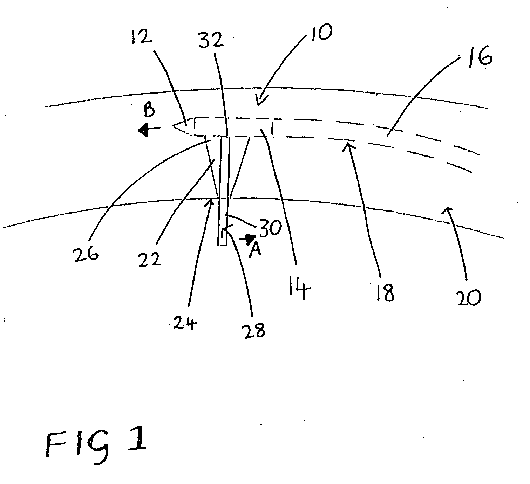

Referring to Fig. 1, there is illustrated a drill 10 not according to the invention including a drill head 12, a drill body 14 and a flexible drive 16. The drill 10 is shown part way through drilling a curved bore 18 through a curved masonry structure 20.

The forwardly directed force keeping the drill moving through the masonry is provided partly by the drilling action of the drill bit in the masonry and partly by a driving force along the flexible drive 16. However, particularly if a hard piece of masonry is encountered, this force may not be sufficient, and the drill may cease its forward movement or may start to move in the wrong direction. When this occurs, the method and apparatus of the invention allows the drill to be propelled forward, as follows.

It may be seen that a slot 22 has been drilled into the masonry structure 20, from its underside 24. In the illustrated embodiment, the slot 22 is narrow where it first enters the masonry structure 20 but opens out in a wedge shape towards a wide part 26, where the slot meets the bore 18. However, the slot may have parallel sides, for example if mortar is simply removed from between bricks.

A reaction member in the form of a lever 28 is provided within the slot 22. The reaction member includes a lower part 30 which protrudes from the slot and an end part 32 which may engage the drill 10 as described below.

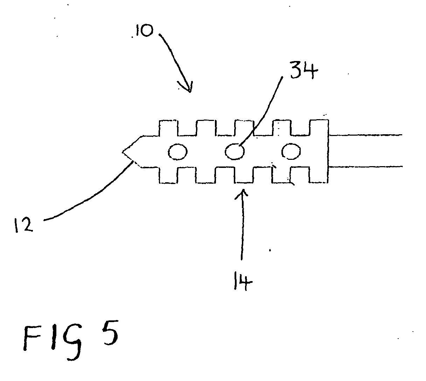

Referring to Fig. 5, the drill body 14 not according to the invention is provided with a number of holes 34, of generally complementary shape to the end part 32 of the lever. The end part 32 of the lever may thus be inserted into one of the holes 34, to form an engagement between the lever 28 and the drill body 14. Referring again to Fig. 1, with the drill 10 stationary the end part 34 is inserted into one of the holes 32, and the lower part 30 of the lever 28 is forced in the direction of the arrow A, causing the lever to pivot in the slot and urge the drill body 14 forwardly along its drilling path through the masonry structure (arrow B). The drill 10 may thereby be forced through any particularly hard areas of masonry, before normal drilling recommences. The drill may also be manipulated to change its direction if necessary.

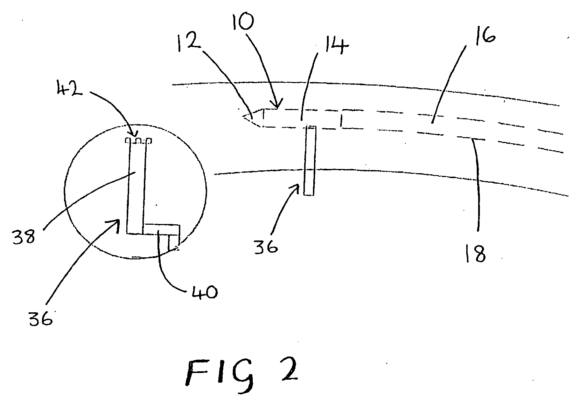

Referring to Fig. 2, there is illustrated a second embodiment not according to the invention. Parts corresponding to those shown in Fig. 1 are given the same reference numerals. In the Fig. 2 embodiment, the apparatus includes a reaction member in the form of a gear rod 36. The gear rod includes a hollow shaft 38 provided with a handle 40 at one of its ends and a gear 42 at its other end.

The drill body 14 includes grooves or threads which can engage the teeth of the gear 42 such that when the handle 40 is used to rotate the shaft 38 about its own axis, the movement of the gear 42 causes forward movement of the drill 10 through the masonry structure.

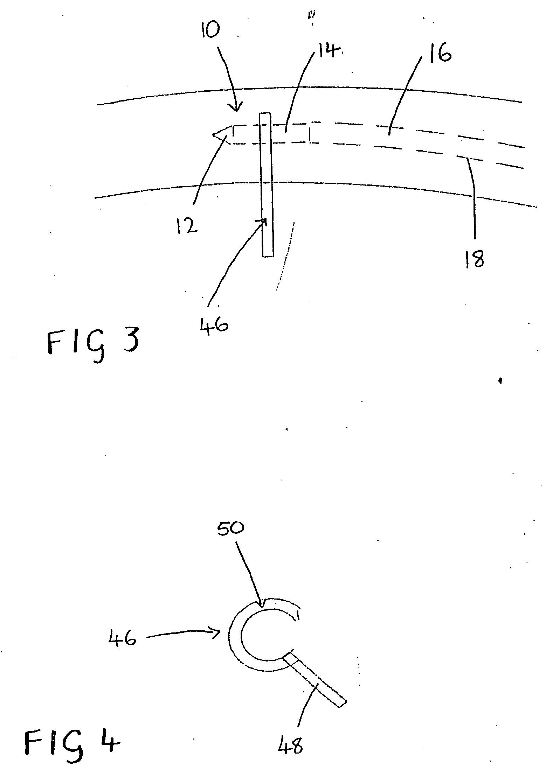

Referring to Figs. 3 and 4, there is illustrated a further embodiment not according to the invention in which corresponding parts are again given the same reference numerals. In this embodiment, a reaction member in the form of a threaded guide 46 is provided. The threaded guide 46 includes an elongate shaft 48 and a ring member 50 which is part-annular shaped and internally threaded. The drill 10 for use in this embodiment not according to the invention includes an external thread on its body 14 (not visible in Fig. 3). The internal thread on the ring member 50 is able to engage with the external thread on the drill head 12.

In this embodiment not according to the invention, the threaded guide is first inserted through a hole 52 in the masonry structure before the drill is advanced forward such that its drill head 12 passes through the ring member 50 of the threaded guide 46 and its threaded drill body 14 comes into engagement with the thread on the member 50. Continued slow rotation of the drill causes it to advance in the forward direction, with the engagement of the drill body 14 with the internal thread on the annular member 50 providing a forward reaction force to maintain the forward movement, and to control the direction.

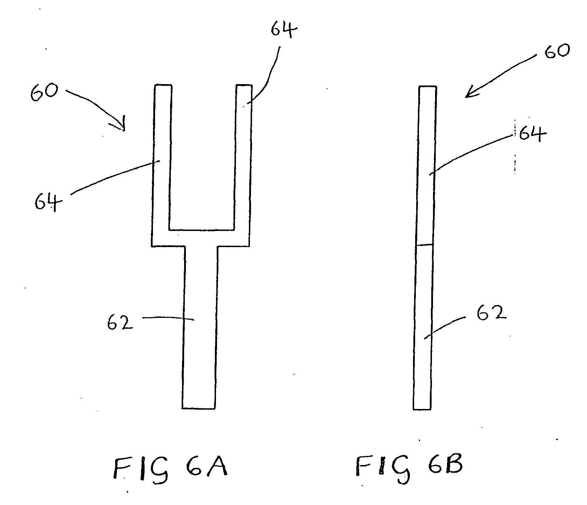

Referring to Figs 6A and 6B there is illustrated an alternative reaction member 60. The reaction member 60 includes an elongate shaft 62 and two prongs 64. The prongs 64 are able to embrace and engage a drill head 12 or drill body 14. The reaction member 60 may then be manipulated to urge the drill forwards as described previously.

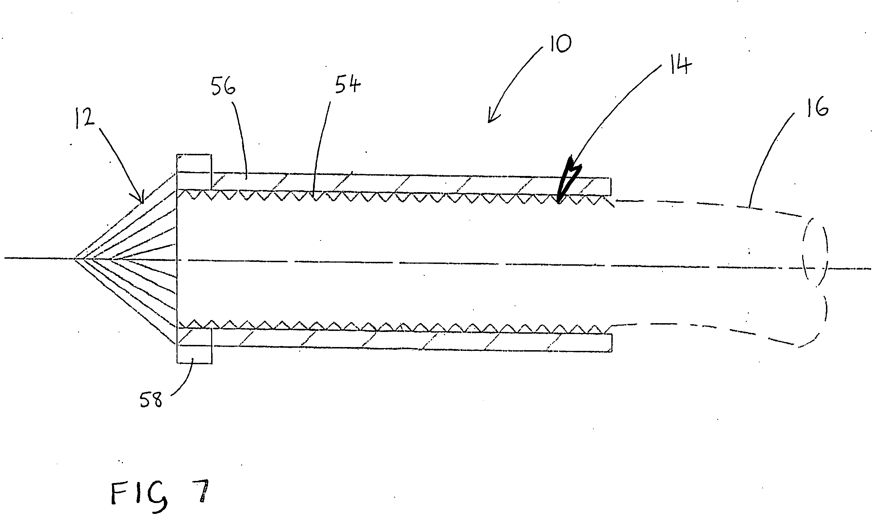

Fig. 7 illustrates an alternative embodiment of drill 10 according to the invention. The drill 10 includes a drilling head 12, a drill body 14 and a flexible drive 16. The drill body 14 is provided with an external thread 54. A collar 56, which includes an internal thread, surrounds and engages the drill body 14. Thus in normal use the external thread of the drill body is not exposed.

The collar 56 further includes a retractable cam 58 similar to that described in more detail in earlier patent application number WO/0179649. When the drill 10 is used to drill normally through the masonry structure, its direction of rotation is such that the cam has no effect. However, if the drill is rotated in an opposite direction, the cam fouls against an internal wall of the bore drilled through the structure. This prevents further forward movement of the cam 58 and therefore the collar 56 until the drill direction is again reversed.

According to the invention, the drill of Fig. 7 is used as follows. The drill 10 is used to drill through the structure in the normal way, with the drilling direction such that the cam remains in its neutral, inactive position. When the drill encounters a hard material such that an additional forward force is required, the drill initially stops. The direction of rotation may then be reversed to activate the cam 58 which secures the collar 56 in place within the bore. The drilling may then be resumed, using the opposite drilling direction to that used previously such that the cam 58 remains in engagement with the bore 18. This extends the drill body out in front of the collar, with the engagement of the cam against the internal walls of the drilling bore 18 causing the necessary reaction force. The drill 10 would include two shafts, an outer one to operate the cam 58 and an inner one to turn the drill head.

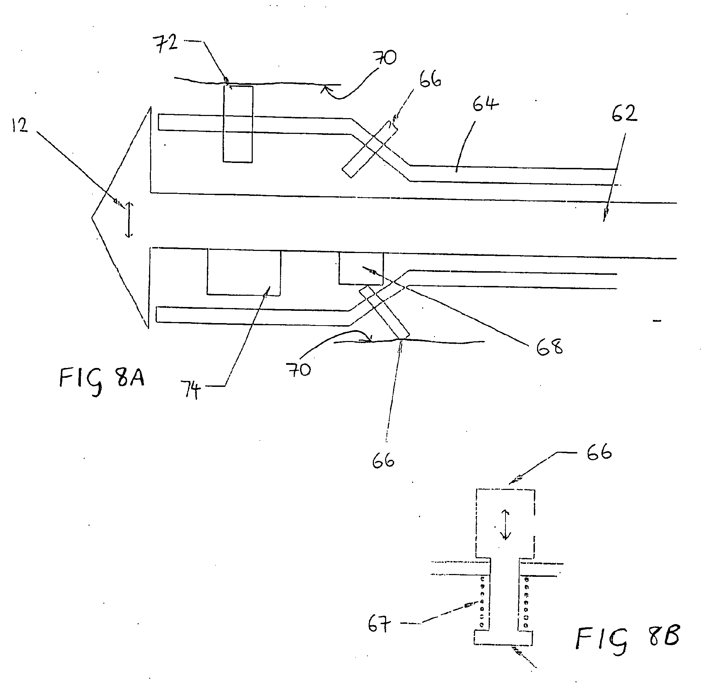

Figs. 8A and 8B illustrate a further embodiment of a drill 10 not according to the invention. The drill 10 includes a drilling head 12 and a flexible inner drive shaft 62 which drives the rotation of the head. The drilling head 12 may be rotated in either direction to drill through the structure. The drill 10 further includes an outer shaft 64, concentric with the shaft 62. The inner and outer shafts 62 and 64 may be caused to rotate together or independently.

The outer shaft 64 is provided with a reaction member in the form of a piston 66 (see the detailed view in Fig. 8B). The piston 66 is moveable between a passive position illustrated by the piston shown at the top of Fig. 8, and an active position illustrated by the piston shown at the bottom of Fig. 8. The piston is biased by a compression spring 67 (see Fig. 8B) into the passive position.

The inner shaft 62 is provided with a radial projection in the form of a cam 68. When the cam 68 is radially aligned with the piston 66, it causes the piston 66 to move from its passive position to its active position. As such movement takes place, the piston engages and pushes against an internal wall 70 of the bore.

The drill of Figs. 8A and 8B may be used as follows. The drill 10 is used to drill through the structure in the normal way, with the inner shaft 62 and outer shaft 64 being caused to rotate together. The relative positions of these shafts are such that the cam 68 does not engage the piston 66 and the piston 66 remains in its passive position. When the drill 10 encounters a hard material such that an additional forward force is required, the drill initially stops. At this time, the outer shaft 64 may be caused to stop rotating, and the inner shaft 62 rotated slowly, thereby causing relative moment of the inner and outer shafts. This brings the cam 68 into a position in which it pushes the piston 66 into its active position. This causes a reaction force against an inner wall 70 of the bore, thereby propelling the drill 10 forwards within the bore.

As an alternative or in addition to the piston 66, the drill 10 may be provided with a side piston 72 which may be caused by a cam 74 to extend outwardly against the inner wall 70 of the bore, thereby causing a sideways movement of the drill 10, to assist a change in direction.

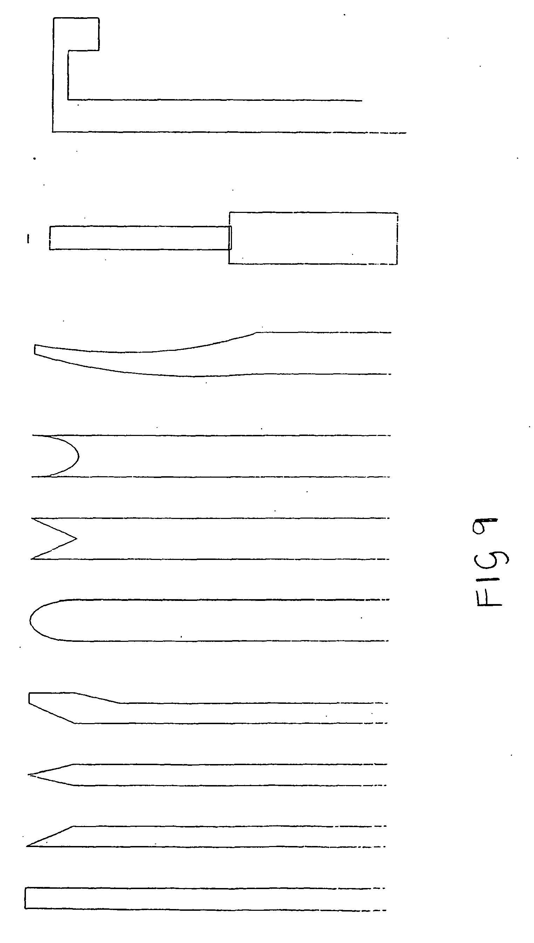

Various modifications may be made to the above described embodiment. For example various different shapes of reaction member end are illustrated in Fig. 9.

The flexible drive 16 may have a hollow centre for fluid supply to the drill head 12 and/or for waste removal from the drill head, or to contain cable, fibre optic or other communication cables. Internal tubing may be provided within the flexible drive 16 for air or fluid transfer to power the drill head, for hydraulic or air-powered motors.

The drilling head 12 may be steered by cams activated by the shaft or by pressure of water, air, gas, etc, or by pressure jets located in the head. Alternatively the drill head 12 may be steered by offset pilot drills in the main bore head or by radio controlled, X-ray, radar or similar guidance systems.

The drill head may further include radio controlled detection systems or may react with remote sensors on reaction members inserted in the masonry to allow the drill head to find and locate with the reaction member. The drill head may be powered by a drive motor incorporated in the head driven by air, water, electricity, etc. This may have radio, magnetic, electrical, air, water, gas, or fibre optic operated controls. It may relate with the reaction member to guide the drill head and provide feedback in the same way. The head may further communicate with a control centre by radio waves, electricity, fibre optics or through pressure plates/indicators/sensors to allow monitoring of the progress and location of the drill head. The drill head may alternatively communicate with the control centre through communication by a central cable located in the flexible drive shaft.

The reaction member may contain radio wave, radar, magnetic or electrical sensors and transmitter and locating devices to allow the plotting of each position. The reaction member may also provide guidance to drill head and remote operator by transmitting signals. The reaction member may be inserted into the masonry ahead of the drill head and may be used to inject glues, grouts or other materials, or to drain off water and waste materials. Further it may be used as an injection ports to facilitate material injection.

## Claims

1. A method of drilling through a masonry structure (20), the method including the steps of:
providing a drill (10) including a drill body (14), a drilling head (12), and a drive shaft (16) attached to the drill body (14) and using the drill (10) to drill a bore (18) in the masonry structure (20);
**characterised in that**:
the drill body (14) includes an externally threaded part (54); and
the drill (10) includes a reaction member in the form of a collar (56) including an internal thread, the collar (56) surrounding and engaging the externally threaded part (54) of the drill body (14);
wherein the method includes the steps of:
causing engagement of the collar (56) with the masonry structure (20) so that the collar (56) engages both the masonry structure (20) and the externally threaded part (54) of the drill body (14) within the masonry structure (20) to provide a reaction force to assist the movement of the drill (10) through the masonry structure (20) as it drills the bore, said engagement step comprising selectively securing the collar (56) in place within the bore (18); and
causing the externally threaded part (54) of the drill body (14) to rotate and thereby move forwards due to the reaction force provided by the collar (56).

2. A method according to claim 1, including the step of rotating the drill (10) in a direction opposite from the drilling direction in order to cause a cam associated with the collar (56) to engage against internal walls of the bore (18), thereby securing the collar (56) in place.

3. An apparatus for drilling through a masonry structure (20), the apparatus including:
a drill (10) for drilling a bore (18) in the masonry structure (20), the drill (10) including a drill body (14), a drilling head (12), and a drive shaft (16) attached to the drill body (14);
**characterised in that**:
the drill body (14) includes an externally threaded part (54); and
the drill (10) includes a reaction member in the form of a collar (56) including an internal thread, the collar (56) surrounding and engaging the externally threaded part (54) of the drill body (14);
wherein the collar (56) is engageable with both the masonry structure (20) and the externally threaded part (54) of the drill body (14) within the masonry structure to provide a reaction force to assist the movement of the drill (10) through the masonry structure (20) as it drills the bore, the drill (10) including means for selectively securing the collar (56) in place within the bore (18) to provide said engagement, thereby enabling the externally threaded part (54) of the drill body (14) to be rotated and thereby move forwards due to the reaction force provided by the collar (56).

4. An apparatus according to claim 3, wherein the means for selectively securing the collar (56) in place includes a cam which is inactive when the drill (10) is rotated in the normal drilling direction but which fouls against an inside of the bore (18) when the drill (10) is rotated in an opposite direction, the cam being attached to the collar (56) such that rotation of the drill (10) in this opposite direction results in the collar (56) being secured within the bore (18), thus enabling the externally threaded part (54) of the drill body (14) to extend forwardly thereof.

## Patentansprüche

1. Verfahren zum Bohren durch ein Mauerwerk (20), wobei das Verfahren folgende Schritte aufweist:
Vorsehen eines Bohrers (10) mit einem Bohrerkörper (14), einem Bohrkopf (12) und einer Antriebswelle (16), welche an dem Bohrerkörper (14) angebracht ist, und Einsetzen des Bohrers (10), um eine Bohrung (18) in das Mauerwerk (20) zu bohren,
**dadurch gekennzeichnet, dass**
der Bohrerkörper (14) einen außen mit einem Gewinde versehenen Teil (54) aufweist, und
der Bohrer (10) ein Reaktionsglied in Form eines Kragens (56) mit einem Innengewinde aufweist, wobei der Kragen (56) den außen mit Gewinde versehenen Teil (54) des Bohrerkörpers (14) umgibt und mit diesem verbunden ist;
wobei das Verfahren folgende Schritte aufweist:
Veranlassen eines Kontaktes des Kragens (56) mit dem Mauerwerk (20), sodass der Kragen (56) mit dem Mauerwerk (20) und mit dem außen mit Gewinde versehenen Teil (54) des Bohrerkörpers (14) in dem Mauerwerk in Kontakt kommt, um eine Reaktionskraft zu erzeugen, um die Bewegung des Bohrers (10) durch das Mauerwerk (20), wenn er die Bohrung bohrt, zu unterstützen, wobei der genannte Schritt "Veranlassen eines Kontaktes" das selektive Befestigen des Kragens (56) an Ort und Stelle innerhalb der Bohrung (18) beinhaltet, und
Veranlassen, dass der außen mit Gewinde versehene Teil (54) des Bohrerkörpers (14) sich dreht, und hierdurch aufgrund der Reaktionskraft, welche durch den Kragen (56) geschaffen wird, vorwärts bewegt.

2. Verfahren nach Anspruch 1, mit dem Schritt
Drehen des Bohrers (10) in einer Richtung entgegengesetzt zu der Bohrrichtung, um zu veranlassen, dass ein an dem Kragen (56) angeordneter Nocken mit der Innenwand der Bohrung (18) in Kontakt kommt, wodurch der Kragen (56) an Ort und Stelle festgemacht wird.

3. Vorrichtung zum Bohren durch ein Mauerwerk (20), wobei die Vorrichtung folgende Merkmale aufweist:
einen Bohrer (10) zum Bohren einer Bohrung (18) in das Mauerwerk (20), wobei der Bohrer (10) einen Bohrerkörper (14), einen Bohrkopf (12) und eine Antriebswelle (16), welche an dem Bohrerkörper (14) befestigt ist, aufweist,
**dadurch gekennzeichnet, dass**
der Bohrerkörper (14) einen außen mit einem Gewinde versehenen Teil (54) aufweist, und
der Bohrer (10) ein Reaktionsglied in Form eines Kragens (56) aufweist, welcher ein Innengewinde aufweist, wobei der Kragen (56) den außen mit Gewinde versehenen Teil (54) des Bohrerkörpers (14) umgibt und mit diesem verbunden ist,
wobei der Kragen (56) mit dem Mauerwerk (20) und mit dem außen mit Gewinde versehenen Teil (54) des Bohrerkörpers (14) in dem Mauerwerk in Kontakt bringbar ist, um eine Reaktionskraft zu schaffen, um die Bewegung des Bohrers (10) durch das Mauerwerk (20), wenn er die Bohrung bohrt, zu unterstützen, wobei der Bohrer (10) eine Einrichtung zum selektiven Festmachen des Kragens (56) an Ort und Stelle in der Bohrung (18) aufweist, um diese Verbindung zu schaffen, wodurch ermöglicht wird, dass der außen mit Gewinde versehene Teil (54) des Bohrerkörpers (14) gedreht wird und sich hierdurch aufgrund der Reaktionskraft, welche durch den Kragen (56) geschaffen wird nach vorne bewegt.

4. Vorrichtung nach Anspruch 3, bei der die Einrichtung zum selektiven Festmachen des Kragens (56) an Ort und Stelle einen Nocken aufweist, welcher inaktiv ist, wenn der Bohrer (10) in der normalen Bohrrichtung gedreht wird, welcher jedoch mit einer Innenseite der Bohrung (18) verhakt, wenn der Bohrer in einer entgegengesetzten Richtung gedreht wird, wobei der Nocken an dem Kragen (56) derart angebracht ist, dass eine Drehung des Bohrers (10) in dieser Gegenrichtung dazu führt, dass der Kragen (56) innerhalb der Bohrung (18) festgemacht wird, wodurch ermöglicht wird, dass der außen mit Gewinde versehene Teil (54) des Bohrerkörpers (14) sich von hier nach vorne erstreckt.

## Revendications

1. Procédé de forage à travers une structure de maçonnerie (20), le procédé comprenant les étapes consistant à :
fournir une mèche (10) comprenant un corps de mèche (14), une tête de forage (12) et un arbre d'entraînement (16) fixé au corps de mèche (14) et utiliser la mèche (10) pour forer un perçage (18) dans la structure de maçonnerie (20) ;
**caractérisé en ce que** :
le corps de mèche (14) comprend une partie extérieurement filetée (54) ; et
la mèche (10) comprend un élément de réaction sous la forme d'un collier (56) comprenant un filetage intérieur, le collier (56) entourant la partie extérieurement filetée (54) du corps de mèche (14) et venant en prise avec celle-ci ;
dans lequel le procédé comprend les étapes consistant à :
faire venir en prise le collier (56) avec la structure de maçonnerie (20), de telle sorte que le collier (56) vienne en prise tout à la fois avec la structure de maçonnerie (20) et la partie extérieurement filetée (54) du corps de mèche (14) à l'intérieur de la structure de maçonnerie (20) de façon à produire une force de réaction afin d'assister le déplacement de la mèche (10) à travers la structure de maçonnerie (20) lorsqu'elle fore le perçage, ladite étape de mise en prise comprenant la fixation sélective du collier (56) en place à l'intérieur du perçage (18) ; et
provoquer la rotation de la partie extérieurement filetée (54) du corps de mèche (14), et, par conséquent, son déplacement vers l'avant du fait de la force de réaction communiquée par le collier (56).

2. Procédé selon la revendication 1, comprenant l'étape consistant à faire tourner la mèche (10) dans une direction opposée à la direction de forage afin de faire venir en prise une came associée au collier (56) contre des parois intérieures du perçage (18), de façon à fixer ainsi le collier (56) en place.

3. Appareil pour forer à travers une structure de maçonnerie (20), l'appareil comprenant :
une mèche (10) pour forer un perçage (18) dans la structure de maçonnerie, la mèche (10) comprenant un corps de mèche (14), une tête de forage (12) et un arbre d'entraînement (16) fixé au corps de forage (14) ;
**caractérisé en ce que** :
le corps de mèche (14) comprend une partie extérieurement filetée (54) ; et
la mèche (10) comprend un élément de réaction sous la forme d'un collier (56) comprenant un filetage intérieur, le collier (56) entourant la partie extérieurement filetée (54) du corps de mèche (14) et venant en prise avec celle-ci ;
dans lequel le collier (56) peut venir en prise tout à la fois avec la structure de maçonnerie (20) et la partie extérieurement filetée (54) du corps de mèche (14) à l'intérieur de la structure de maçonnerie (20) de façon à produire une force de réaction afin d'assister le déplacement de la mèche (10) à travers la structure de maçonnerie (20) lorsqu'elle fore le perçage, la mèche (10) comprenant des moyens pour fixer de façon sélective le collier (56) en place à l'intérieur du perçage (18) afin de produire ladite prise, de façon à permettre ainsi à la partie extérieurement filetée (54) du corps de mèche (14) de subir une rotation et de se déplacer ainsi vers l'avant du fait de la force de réaction communiquée par le collier (56).

4. Appareil selon la revendication 3, dans lequel les moyens pour fixer de façon sélective le collier (56) en place comprennent une came qui est inactive lorsque la mèche (10) est en rotation dans la direction de forage normale, mais qui se bloque contre l'intérieur du perçage (18) lorsque la mèche (10) est en rotation dans une direction opposée, la came étant fixée au collier (56) de telle sorte que la rotation de la mèche (10) dans cette direction opposée produise en résultat la fixation du collier (56) à l'intérieur du perçage (18), de façon à permettre ainsi à la partie extérieurement filetée (54) du corps de mèche (14) de s'étendre vers l'avant de celui-ci.
